Europäisches Patentamt

European Patent Office

Office européen des brevets

(19)

(11) EP 0 734 826 B1

(12) EUROPÄISCHE PATENTSCHRIFT

(45) Veröffentlichungstag und Bekanntmachung des
Hinweises auf die Patenterteilung:
21.01.1998 Patentblatt 1998/04

(51) Int. Cl.$^6$: **B29B 13/06**, B29C 47/38,
B29C 47/76, C08L 51/04
// B29K55:02, B29K96:02

(21) Anmeldenummer: 96104479.9

(22) Anmeldetag: 21.03.1996

(54) **Verfahren zur Herstellung von Thermoplasten**

Process for producing thermoplastic resins

Procédé pour la fabrication de matières thermoplastiques

(84) Benannte Vertragsstaaten:
BE DE ES FR GB IT NL

(30) Priorität: 27.03.1995 DE 19511143

(43) Veröffentlichungstag der Anmeldung:
02.10.1996 Patentblatt 1996/40

(73) Patentinhaber:
BASF AKTIENGESELLSCHAFT
67056 Ludwigshafen (DE)

(72) Erfinder:
• Güntherberg, Norbert, Dr.
67346 Speyer (DE)
• Hofmann, Jürgen
67069 Ludwigshafen (DE)
• Mailahn, Elmar
67547 Worms (DE)
• Ohlig, Hilmar
67657 Kaiserslautern (DE)
• Grabowski, Sven, Dr.
67061 Ludwigshafen (DE)
• Czauderna, Bernhard, Dr.
69493 Hirschberg (DE)
• Bus, Klaus
67655 Kaiserslautern (DE)

(56) Entgegenhaltungen:
US-A- 4 802 769

• DATABASE WPI Section Ch, Week 9602 Derwent
Publications Ltd., London, GB; Class AVX, AN
96-017374 (02) XP002005342 & JP-A-07 292 205
(TORAY IND. INC.), 7.November 1995

• DATABASE WPI Section Ch, Week 8925 Derwent
Publications Ltd., London, GB; Class A, AN 89-
184014 (25) XP002005343 & JP-A-01 123 853
(MITSUBISHI RAYON K.K.), 16.Mai 1989 &
PATENT ABSTRACTS OF JAPAN vol. 13, no. 367
(C-626), 15.August 1989 & JP-A-01 123853
(MITSUBISHI RAYON CO. LTD.), 16. Mai 1989

• DATABASE WPI Section Ch, Week 9003 Derwent
Publications Ltd., London, GB; Class A, AN 90-
017266 (03) XP002005344 & JP-A-01 123 852
(MITSUBISHI RAYON K.K.), 16. Mai 1989 &
PATENT ABSTRACTS OF JAPAN vol. 13, no. 367
(C-626), 15.August 1989 & JP-A-01 123852
(MITSUBISHI RAYON CO. LTD.), 16. Mai 1989

• DATABASE WPI Section Ch, Week 8122 Derwent
Publications Ltd., London, GB; Class A, AN 81-
38769D (22) XP002005345 & JP-A-56 036 539
(TORAY IND. INC. ), 9. April 1981 & PATENT
ABSTRACTS OF JAPAN vol. 5, no. 94 (C-059),
19.Juni 1981 & JP-A-56 036539 (TORAY IND.
INC.), 9. April 1981

• DATABASE WPI Section Ch, Week 8925 Derwent
Publications Ltd., London, GB; Class A, AN 89-
182822 (25) XP002005346 & JP-A-01 121 311
(MITSUBISHI RAYON K.K.), 15. Mai 1989 &
PATENT ABSTRACTS OF JAPAN vol. 13, no. 362
(C-625), 14.August 1989 & JP-A-01 121311
(MITSUBISHI RAYON CO. LTD.)

• DATABASE WPI Section Ch, Week 9237 Derwent
Publications Ltd., London, GB; Class A, AN 92-
304947 (37) XP002005347 & JP-A-04 211 430
(MITSUBISHI RAYON CO. LTD.) & PATENT
ABSTRACTS OF JAPAN vol. 16, no. 552 (C-1006),
20. November 1992 & JP-A-04 211430
(MITSUBISHI RAYON CO. LTD.), 3. August 1992

- DATABASE WPI Section Ch, Week 9102 Derwent Publications Ltd., London, GB; Class A, AN 91-012264 (02) XP002005348 & JP-A-02 286 208 (TOSHIBA MACH. K.K.), 26. November 1990 & PATENT ABSTRACTS OF JAPAN vol. 15, no. 53 (M-1079), 7.Februar 1991 & JP-A-02 286208 (TOSHIBA MACH. CO. LTD.), 26. November 1990

**Beschreibung**

Die vorliegende Erfindung betrifft ein neues Verfahren zur Herstellung von schlagzäh modifizierten Thermoplasten durch Vermischen einer wasserfeuchten, bis zu 60 Gew.-% Restwasser enthaltenden Elastomerkomponente A mit einem thermoplastischen Polymeren B sowie weiteren Polymeren C und Zusatzstoffen D in einer Schneckenmaschine unter mechanischer Entwässerung der Elastomerkomponente A, bei dem man die Komponenten A, B, C und D einem Zweischneckenextruder mit gleichsinnig rotierenden Schnecken zuführt, der in Förderrichtung im wesentlichen aus

- mindestens einem unbeheizten Dosierabschnitt, in den mittels einer Dosiereinrichtung die Elastomerkomponente A dem Extruder zugeführt wird,

- mindestens einem der Entwässerung der Komponente A dienenden unbeheizten Abquetschabschnitt, der mindestens ein Stauelement, sowie jeweils mindestens eine zugehörige Entwässerungsöffnung, enthalt, wobei als Entwässerungsöffnungen keine Seihergehäuse verwendet werden,

- mindestens einem Abschnitt, in dem das thermoplastische Polymere B als Schmelze in den Extruder eingeführt wird,

- mindestens einem mit Durchmischungs-, Knet- und/oder anderen Plastifizierungselementen versehenen Abschnitt,

- mindestens einem mit mindestens einer Entgasungsöffnung versehenen Entgasungsabschnitt, in dem das restliche Wasser als Dampf entfernt wird, und

- einer Austragszone

aufgebaut ist, bei dem das aus den Entwässerungsöffnungen austretende Wasser teilweise oder vollständig in flüssiger Phase vorliegt, und bei dem die Komponenten C und/oder D gemeinsam oder getrennt voneinander entweder mit der Komponente A und/oder B zusammen oder getrennt von A und B einem oder mehreren der genannten Extruderabschnitte zugeführt werden.

Außerdem betrifft die Erfindung spezielle Ausführungsformen des genannten Verfahrens, auch solche unter Verwendung bestimmter Komponenten A, B und C.

Als Elastomerkomponenten für die Schlagzähmodifizierung von thermoplastischen oder anderen Kunststoffen werden häufig partikelförmige Kautschuke verwendet, die gepfropft oder ungepfropft sein können. Solche Kautschuke werden üblicherweise in wäßrigen Systemen hergestellt, beispielsweise durch Emulsions- oder Suspensionspolymerisation. Die bei der Suspensionspolymerisation entstandenen bzw. bei der Emulsionspolymerisation durch Zugabe eines koagulierenden Fällmittels ausgefällten Partikel werden in der Regel mit Wasser gewaschen und durch ein geeignetes Entwässerungsverfahren wie Sieben, Filtrieren, Dekantieren, Zentrifugieren oder eine teilweise thermische Trocknung, z.B. mittels eines Stromtrockners oder eines Sprühtrockners, entwässert. Man erhält in jedem Falle teilentwässerte Produkte.

Häufig verwendete Pfropfkautschuke sind beispielsweise mit einem Styrol-Acrylnitril-Copolymeren (SAN) gepfropftes Polybutadien und mit einem solchen Copolymeren gepfropftes Poly-n-butylacrylat, oder aus mehreren Pfropfstufen aufgebaute Kautschuke auf Basis von Butadien, Styrol, n-Butylacrylat, Methylmethacrylat und/oder Acrylnitril.

Der Restwassergehalt des nach der Teilentwässerung erhaltenen Kautschuks beträgt bis zu 60 Gew.-% und wird üblicherweise durch energieaufwendiges Trocknen entfernt. Der als Pulver anfallende, getrocknete Kautschuk wird schließlich in den als Pulver oder Granulat vorliegenden Thermoplasten unter Aufschmelzen eingearbeitet, wobei das Endprodukt entsteht. Auch sind Verfahren bekannt, in denen Kautschuk- und Matrixpolymere gemeinsam gefällt und getrocknet werden. Das Kautschukpulver neigt während des Trocknens und der Einarbeitung in den Thermoplasten wegen des Feinstaubanteils zur Selbstentzündung.

Nach einem in DE-A-20 37 784 beschriebenen Vorschlag kann man teilentwässerten Pfropfkautschuk in eine SAN-Schmelze unter Verdampfen des Wassers eintragen und einen diesen Pfropfkautschuk enthaltenden Thermoplasten erhalten. Dieses Verfahren erfordert einen relativ hohen Aufwand an elektrischer Energie.

Die EP-A 534 235 lehrt ein Verfahren zur Herstellung von schlagzäh modifizierten Thermoplasten durch Einarbeitung von mechanisch teilweise entwässertem Kautschuk in einen Thermoplasten oberhalb des Erweichungspunktes des Thermoplasten, wobei die Einarbeitung in einem Hauptextruder geschieht und die Teilentwässerung des Kautschuks in einem seitlich am Hauptextruder angebrachten sog. Seitenextruder vorgenommen wird. Das im Kautschuk verbliebene Restwasser wird während der Einarbeitung durch vor und nach der Einmischstelle befindliche Entgasungsöffnungen als Dampf entfernt.

Nachteilig an diesem Verfahren ist die Notwendigkeit, zur Herstellung des schlagzähen Thermoplasten zwei Extruder betreiben zu müssen. Außerdem ist die Entwässerung des Kautschuks im Seitenextruder nicht vollständig, so daß eine große Menge Wasser im Hauptextruder verdampft werden muß.

Die US-Patentschrift 5 151 026 beschreibt einen Extruder, in dem zerkleinerte und gewaschene Kunststoffabfälle, deren Wasseranteil bis zu 50 Gew.-% beträgt, entwässert werden. Zu diesem Zweck befinden sich in der Extruderschnecke, die ansonsten wie üblich ein Rechtsgewinde aufweist, kurze Abschnitte mit einem Linksgewinde. Die aus dieser US-Schrift hervorgegangene Teilanmeldung US 5 232 649 beschreibt das entsprechende Verfahren.

Die japanische Schrift JP 22 86 208 lehrt einen Zweischneckenextruder für die Entwässerung thermoplastischer Formmassen, dessen Rechtsgewinde-Schnecken jeweils zwei Linksgewinde-Abschnitte aufweisen. Das Wasser tritt flüssig durch sog. Seihergehäuse - siebartige Einsätze im Extrudergehäuse - und als Dampf durch Entgasungsöffnungen aus. Die Seihergehäuse neigen allerdings zu Verstopfungen durch austretendes Polymermaterial, wie es beispielsweise in der DE 15 79 106 für die Entwässerung von Synthesekautschuk beschrieben ist.

Die JP-A 1/202 406 beschreibt ebenfalls ein Verfahren, in dem feuchte kautschukartige Polymere auf einem Extruder in einem mit Seihergehäuse versehenen Bereich zunächst teilentwässert werden und dann das restliche Wasser in einer atmosphärischen und drei sich daran anschließenden Vakuum-Entgasungszonen entfernt wird. Dieses Verfahren beinhaltet neben den anfälligen Seihergehäusen noch einen aufwendigen Vakuum-Entgasungsbereich.

Die US-Patentschrift 4 802 769 beschreibt einen Extruder, in dem eine wässrige Suspension ("slurry") eines Kautschuk-Polymeren, sowie ein Styrol-Acrylnitril-Copolymer zu einem Thermoplasten verarbeitet werden. Dabei tritt das Wasser durch Seihergehäuse flüssig und durch eine dreistufige Entgasung als Dampf aus. Als Nachteile sind - neben den verstopfenden Seihergehäusen - zu nennen, daß der mit Seihergehäusen versehene Extruderteil beheizt ist, und daß im Entgasungsteil ein mehrfacher Druckaufbau durch Stauelemente erfolgt, wodurch das Polymermaterial thermisch und mechanisch stark beansprucht wird.

Die Patentschrift DE 30 26 842 lehrt einen Doppelschnecken-Extruder zur Entgasung von Thermoplasten, in dessen Entgasungs- und Ausstoßzone die Schneckenkerne einen geringen und das Doppelschneckengehäuse einen größeren Durchmesser haben als die vorangehenden Zonen. Dem Thermoplasten werden geringe Mengen Wasser zugegeben. In der aufgeweiteten, unter Vakuum betriebenen Entgasungszone entsteht unter Aufschäumen des Thermoplasten Wasserdampf, der die zu entfernenden Restmonomere mitreißt. Durch das Aufschäumen der Thermoplastschmelze ist der Vakuumbetrieb relativ störanfällig.

Der Erfindung lag die Aufgabe zugrunde, ein Verfahren bereitzustellen, welches die geschilderten Nachteile nicht aufweist. Insbesondere sollte ein Verfahren geschaffen werden, das die Herstellung eines schlagzähen Thermoplasten aus einer wasserfeuchten Elastomerkomponente und einem thermoplastischen, spröden Polymeren auf technisch einfache Weise, möglichst in einem Verfahrensschritt, ermöglicht. Weiterhin soll das Verfahren das Polymermaterial thermisch und mechanisch möglichst gering beanspruchen.

Demgemäß wurde das eingangs definierte Verfahren gefunden.

Außerdem wurden besondere Ausführungsformen des Verfahrens hinsichtlich der Ausgestaltung des Extruders und der verwendeten Komponenten A, B und C gefunden.

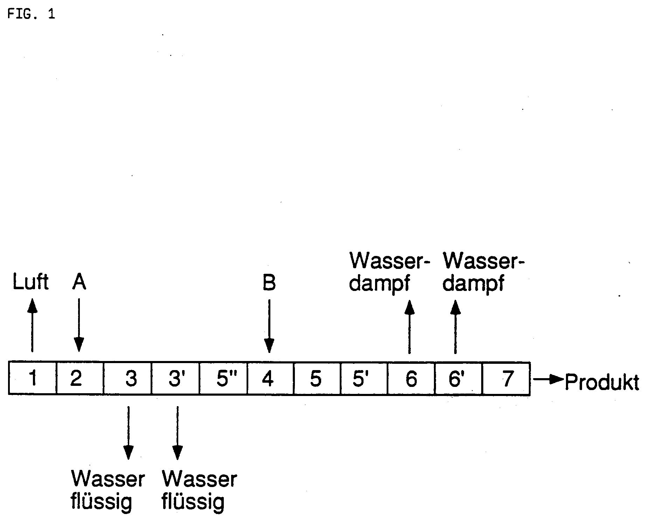

Nachfolgend seien das Verfahrensprinzip und die bevorzugten Ausführungsformen des Verfahrens beschrieben, wobei die als Abschnitte bzw. Zonen bezeichneten Bestandteile des Extruders nicht notwendigerweise identisch sind mit den einzelnen Bauteilen wie Gehäuseteilen, Schneckensegmenten, aus denen der Extruder montiert ist. Ein Abschnitt bzw. eine Zone besteht in der Regel aus mehreren Bauteilen. Die bei den Abschnitten bzw. Zonen genannten Ziffern beziehen sich auf Fig. 1.

Die wasserfeuchte, bis zu 60 Gew.-% Restwasser enthaltende Elastomerkomponente A, beispielsweise ein durch Ausfällen eines durch Emulsionspolymerisation gewonnener und auf bis zu 60 Gew.-% Restwassergehalt teilentwässerter Pfropfkautschuk - wobei die Teilentwässerung z.B. durch Filtrieren, Dekantieren, Zentrifugieren oder thermische Trocknung erfolgen kann -, wird dem Dosierabschnitt 2 des Extruders zugeführt, wobei der Dosierabschnitt üblicherweise aus einer automatisch arbeitenden Dosiereinrichtung und der eigentlichen Dosieröffnung besteht. Die Dosiereinrichtung ist beispielsweise als Förderschnecke ausgebildet, die das Fördergut in die Dosieröffnung fördert oder drückt. Ebenso ist denkbar, daß die Komponente A durch geeignete gravimetrische oder volumetrische Dosiereinrichtungen dosiert und im freien Fall in die Einzugsöffnung des Extruders dosiert wird. Mittels einer geeigneten Schneckengeometrie im Dosierabschnitt wird erreicht, daß die Komponente A eingezogen und entlüftet wird.

In einer bevorzugten Ausführungsform befindet sich ein Entlüftungsabschnitt 1 stromaufwärts entgegen der Förderrichtung des Extruders. Er weist typischerweise eine oder mehrere Entlüftungsöffnungen auf, durch die eingeschlossene Luft entweichen kann.

In einer bevorzugten Ausführungsform wird in die Entlüftungsöffnung oder in eine oder mehrere weitere, am Entlüftungsabschnitt angeordnete Öffnungen, die Komponente C und/oder die Komponente D eindosiert. Werden beide Komponenten C und D zugeführt, so kann dies gemeinsam durch eine Öffnung oder durch verschiedene Öffnungen (je eine für C bzw. D) geschehen.

In einer anderen bevorzugten Ausführungsform wird in die Dosieröffnung des Dosierabschnittes oder in eine oder

4

EP 0 734 826 B1

mehrere weitere, am Dosierabschnitt angeordnete Öffnungen, die Komponente C und/oder die Komponente D eindosiert. Dies kann auch in einem weiteren Dosierabschnitt 2' erfolgen, der dem ersten Dosierabschnitt 2 nachfolgt und für den im wesentlichen die zum Abschnitt 2 gemachten Ausführungen gelten.

Die Komponenten C und D können in den Dosierabschnitten getrennt von A oder zusammen mit A in einer der folgenden Kombinationen dem Extruder zugeführt werden: A+C+D, A/C+D, A+C/D, A+D/C, A/C/D (wobei / "getrennt von" mittels je einer separaten Öffnung und + "zusammen mit" durch eine gemeinsame Öffnung bedeutet).

Die Dosiereinrichtung für die Komponenten C und/oder D kann in beiden genannten Ausührungsformen je nach Aggregatzustand von C und D beispielsweise eine Förderschnecke wie bei der Dosierung der Elastomerkomponente A, eine Pumpe oder auch ein Extruder sein.

Im Bereich der Dosierabschnitte und - sofern vorhanden - im Entlüftungsabschnitt sind die Extruderschnecken in der Regel als übliche Förderschnecken ausgebildet. Übliche Förderschnecken im Sinne dieser Anmeldung sind Elemente mit "Erdmenger"-Profil (vollständig selbstreinigend), Schubkantenelemente, Elemente mit Trapezprofil und Elemente mit Rechteckprofil, oder Kombination dieser Elemente, wobei die Schnecken auch abweichend von der Gangzahl des Abquetschteils mit geringerer oder höherer Gangzahl ausgestattet sein können. Hier können auch zwei- und eingängige Schneckenelemente zur Anwendung kommen. Die Schneckenelemente der Förderschnecke können in den genannten Abschnitten gleich oder verschieden sein.

Die wasserfeuchte Elastomerkomponente wird stromabwärts in den ersten Abquetschabschnitt gefördert.

Im ersten Abquetschabschnitt 3 wird ein erheblicher Teil des in der Elastomerkomponente enthaltenen Restwassers mechanisch entfernt. Das Material wird gegen ein als Hindernis wirkendes Stauelement gefördert, welches sich in der Regel am Ende des Abquetschabschnitts befindet. Hierdurch wird ein Druck aufgebaut, der das Wasser aus der Elastomerkomponente auspreßt. Man kann den Druck je nach dem rheologischen Verhalten des Kautschuks durch unterschiedliche Anordnung von Schnecken-, Knetelementen oder anderen Stauelementen aufbauen. Grundsätzlich sind alle handelsüblichen, dem Druckaufbau dienenden Vorrichtungselemente denkbar.

Beispielsweise seien als mögliche Stauelemente

- überschobene, fördernde Schneckenelemente
- Schneckenelemente mit Steigung entgegen der Förderrichtung
- Knetblöcke mit nichtfördernden Knetscheiben in unterschiedlicher Breite
- Knetblöcke mit rückfördernder Steigung
- Knetblöcke mit fördernder Steigung
- Zylinderscheiben, Exzenterscheiben und daraus konfigurierte Blöcke
- neutrale Stauscheiben ("Drosselscheiben")
- mechanisch verstellbare Drosseln (Schiebegehäuse, Radialdrosseln, Zentraldrosseln)

genannt.

Es können auch zwei oder mehrere der Stauelemente miteinander kombiniert werden. Gleichfalls kann die Stauwirkung durch die Länge und die Intensität der einzelnen Stauelemente dem jeweiligen Elastomeren angepaßt werden.

Im ersten Abquetschabschnitt sind bevorzugt sämtliche konstruktiven Merkmale und alle Betriebsparameter des Extruders derart aufeinander abgestimmt, daß bei der gewählten Schneckendrehzahl das Elastomermaterial zwar gefördert und komprimiert, jedoch nicht oder lediglich in untergeordnetem Maße plastifiziert oder angeschmolzen und nicht aufgeschmolzen wird.

Bevorzugt enthält der Abquetschabschnitt 3 des Extruders zum Druckaufbau Schneckenelemente mit einer Steigung entgegen der Förderrichtung und/oder entsprechende Knetblöcke.

Das im Abquetschabschnitt aus dem Elastomermaterial ausgepreßte Wasser verläßt den Extruder in flüssiger Phase und nicht als Dampf. In einer weniger bevorzugten Ausführungsform treten bis zu 20 Gew.-% des in diesem Abschnitt entfernten Wassers als Dampf aus.

Der Abquetschabschnitt ist mit einer oder mehreren, im Regelfall unter Normaldruck oder Überdruck stehenden Entwässerungsöffnungen versehen. Sie befinden sich bevorzugt etwa in der Mitte des Abquetschabschnittes und in der Regel an der Oberseite des Extruders. Weiterhin sind die Entwässerungsöffnungen bevorzugt mit einer Vorrichtung versehen, die das Austreten des geförderten, unter Druck stehenden Elastomeren A verhindern. Besonders bevorzugt werden dazu sog. Rückhalteschnecken verwendet.

Die Temperatur des austretenden Wassers beträgt im allgemeinen 20 bis 50°C und bevorzugt 25 bis 40°C, gemessen an der Austrittsöffnung.

Im ersten Abquetschabschnitt werden, abhängig von der Elastomerkomponente und dem anfangs vorhandenen Restwassergehalt, üblicherweise 10 bis 90, bevorzugt 20 bis 80 Gew.-% des anfänglich enthaltenen Restwassers entfernt.

Der Extruder wird in den Dosierabschnitten und in den Abquetschabschnitten nicht beheizt.

Die partiell entwässerte Elastomerkomponente A wird über die Stauzonen hinweggefördert und gelangt in den

5

nächsten Extruderabschnitt.

In einer bevorzugten Ausführungsform folgt auf den soeben beschriebenen ersten Abquetschabschnitt 3 ein zweiter Abquetschabschnitt 3', der wiederum aus einem fördernden Abschnitt und einer als Hindernis wirksamen Stauzone besteht. Hinsichtlich dieses Abschnittes gelten im wesentlichen die gleichen Ausführungen wie zum ersten Abquetschabschnitt 3.

Im zweiten Abquetschabschnitt wird die Elastomerkomponente weiter entwässert, wobei nochmals bis zu 80, bevorzugt bis zu 65 Gew.-% des anfänglich (vor der Extrusion) enthaltenen Wassers entfernt werden. Durch die von der rotierenden Extruderschnecke eingebrachte mechanische Energie steigt die Temperatur der Elastomerkomponente im zweiten Abquetschabschnitt im allgemeinen auf Werte bis 250°C an.

Das in diesem Abschnitt entfernte Wasser tritt zu 20 bis 99 Gew.-% als Flüssigkeit aus, die an 100 Gew.-% fehlende Menge als Dampf. Bevorzugt werden die Entwässerungsöffnungen jedoch so ausgestaltet, daß der Anteil des flüssig austretenden Wassers trotz der hohen Materialtemperatur 70 Gew.-% oder mehr beträgt. Hierzu werden die Geometrien der Extruderschnecken und der Rückhalteschnecken derart gestaltet, daß, beispielsweise durch Druckaufbau im Austrittsbereich oder durch andere Maßnahmen, das Wasser überwiegend flüssig bleibt.

In der Regel liegt die Wassertemperatur an der Austrittsöffnung bei 40 bis 130, bevorzugt bei 50 bis 99°C.

In einer besonderen Ausführungsform wird in mindestens einem der Abquetschabschnitte mindestens eine zugehörige Entwässerungsöffnung unter Überdruck betrieben. Bevorzugt werden dabei die Entwässerungsöffnungen des zweiten Abquetschabschnittes 3' und diejenigen der nachfolgenden Abquetschabschnitte - so vorhanden - unter Überdruck betrieben. Üblicherweise wird in dieser Ausführungsform ein Absolutdruck von bis zu 20 bar eingestellt. Der äußere Druck kann beispielsweise durch einen speziellen Entgasungsdom, versehen mit Wasserableitung und -ausschleusung und Druckhalteventil, oder einer dichtkämmenden gegenläufigen Rückhalteschnecke erzeugt werden.

Die teilentwässerte Elastomerkomponente kann am Ende des zweiten Abquetschabschnittes 3' bereits in größerem Umfange angeschmolzen oder aufgeschmolzen sein und in Form größerer zusammengeschmolzener Agglomerate vorliegen.

Der Extruder kann hinter dem zweiten Abquetschabschnitt 3' weitere Abquetschabschnitte enthalten, insbesondere dann, wenn der anfängliche Restwassergehalt der Elastomerkomponente A hoch ist.

Nach Passieren des letzten Abquetschabschnittes ist die Elastomerkomponente vom Großteil des Restwassers befreit (Komponente A') und gelangt in einen Abschnitt 4, in dem sich eine oder mehrere Zufuhröffnungen für das in Form seiner Schmelze zugeführte thermoplastische Polymere B befinden. Enthält der Abschnitt mehrere Zufuhröffnungen, so können diese z.B. hintereinander entlang einer gedachten Achse in Längsrichtung des Extruders, kreisförmig entlang des Extruderumfanges oder entlang einer imaginären Helix um den Extruder herum angeordnet sein.

Die Zufuhr der Schmelze des Polymeren B kann mittels eines Extruders, bevorzugt jedoch mittels technisch einfacher Fördereinrichtungen wie Schmelzepumpen oder Dosierschnecken erfolgen.

Im beschriebenen Abschnitt 4 können außer der Schmelze des thermoplastischen Polymeren B auch die Komponente C und/oder die Komponente D in den Extruder eingeführt werden. Dabei können diese Komponenten als Schmelze bzw. Flüssigkeit vorliegen und werden in diesem Falle in der Regel mit Fördereinrichtungen, wie sie auch zur Zufuhr der Schmelze des Polymeren B verwendet werden, oder, falls die Komponente flüssig ist, mit einer Flüssigkeitspumpe` zudosiert. Im Falle fester Komponenten C und/oder D erfolgt die Dosierung üblicherweise wie bei Komponente A beschrieben.

Die Komponenten C und D können getrennt von B oder zusammen mit B in einer der folgenden Kombinationen dem Extruder zugeführt werden: B+C+D, B/C+D, B+C/D, B+D/C, B/C/D (wobei / "getrennt von" mittels je einer separaten Öffnung und + "zusammen mit" durch eine gemeinsame Öffnung bedeutet).

Ebenso kann man die Komponenten C und/oder D in nicht oder nicht vollständig aufgeschmolzender Form mittels eines zwangsfördernden Dosierorgans dem Extruder in den Abschnitt 4 oder auch in die bereits beschriebenen Abschnitte 1 und 2 zuführen. Ein solches Dosierorgan ist beispielsweise ein Zweischneckenextruder mit kämmenden, gegenläufigen Schnecken.

Im Bereich des Abschnittes 4, in dem die Schmelze des thermoplastischen Polymeren B sowie gegebenenfalls die Komponenten C und/oder D zugeführt werden, ist die Schnecke zweckmäßigerweise als Förderschnecke ausgebildet, welche die Mischung aus Elastomerkomponente A und der Schmelze des Thermoplasten B sowie gegebenenfalls den Bestandteilen C und/oder D nur in geringem Ausmaß zu homogenisieren vermag. Zur Ausgestaltung der Förderschnecke gilt das für den Dosierabschnitt Gesagte.

An den die Thermoplastschmelze B sowie gegebenenfalls die Bestandteile C und/oder D zuführenden Abschnitt schließt sich ein Abschnitt 5 an, der mit Durchmischungs-, Knet- und/oder anderen Plastifizierungselementen versehen ist ("Plastifizierungsabschnitt").

Die Plastifizierungselemente homogenisieren die Polymerenmischung unter gleichzeitigem Aufschmelzen der entwässerten Elastomerkomponente A' sowie ggf. der Komponente C und/oder D.

Als Plastifizierungselemente kommen die dem Fachmann geläufigen Bauteile in Betracht, beispielsweise Schnekkenelemente mit geringer Steigung in Förderrichtung, Knetblöcke mit schmalen oder breiten, fördernden oder nichtfördernden Knetscheiben, Schneckenelemente mit einer Steigung entgegen der Förderrichtung, oder eine Kombination solcher Elemente. Die Auswahl der Plastifizierungselemente im Plastifizierungsabschnitt hinsichtlich ihrer Art, Anzahl und Dimensionierung richtet sich nach den Komponenten der Polymermischung, insbesondere nach der Viskosität und Erweichungstemperatur sowie der Mischbarkeit der Komponenten.

Der Extruder kann nach dem beschriebenen Plastifizierungsabschnitt einen oder mehrere weitere Plastifizierungsabschnitte 5' enthalten, beispielsweise wenn die Homogenisierung und das Aufschmelzen der Mischung im ersten Plastifizierungsabschnitt nicht vollständig war.

Für den bzw. die weiteren Plastifizierungsabschnitte gelten die Ausführungen zum ersten Plastifizierungsabschnitt entsprechend.

Es ist möglich, mindestens einem der Plastifizierungsabschnitte die Komponente C und/oder die Komponente D zuzuführen, wobei diese Zufuhr der Komponenten getrennt voneinander durch verschiedene Öffnungen oder zusammen durch eine gemeinsame Öffnung erfolgen kann.

In einer bevorzugten Ausführungsform wird die Schmelze der thermoplastischen Polymeren B sowie gegebenenfalls die Komponenten C und/oder D dem Extruder am Anfang des Plastifizierungsabschnittes zugeführt. Bei dieser Ausführungsform fällt demnach der Abschnitt der Thermoplastzufuhr 4 mit dem Anfang des Plastifizierungsabschnittes 5 zusammen.

In einer weiteren besonderen Ausführungsform des Extruders befindet sich ein oder mehrere weitere Plastifizierungsabschnitte vor dem Abschnitt 4, in dem die Schmelze des thermoplastischen Polymeren zugeführt wird, also hinter dem letzten Abquetschabschnitt. In diesem Plastifizierungsabschnitt 5" wird die weitestgehend entwässerte Elastomerkomponente A', beispielsweise das Kautschukpulver, zunächst allein homogenisiert und plastifiziert.

Die Schmelze des thermoplastischen Polymeren B sowie gegebenenfalls die Komponenten C und/oder D werden demnach bei dieser Ausführungsform in eine viskose "Schmelze" der Elastomerkomponente A' eingebracht. In diesem Fall dient der der Zumischung von Schmelze B sowie C und/oder D (Abschnitt 4) nachfolgende Plastifizierungsabschnitt 5 lediglich der Homogenisierung des Gemisches der bereits im plastischen Zustand vorliegenden Komponenten und enthält daher in der Regel weniger Durchmischungselemente als die bisher beschriebenen Plastifizierungsabschnitte.

Welche der beschriebenen Varianten der Zufuhr von Schmelze B, und fakultativ den Komponenten C und/oder D, nämlich

- in einen fördernden Abschnitt vor dem Plastifizierungsabschnitt,
- am Anfang des Plastifizierungsabschnittes,
- in einen fördernden Abschnitt zwischen zwei Plastifizierungsabschnitten,

gewählt wird, hängt von den Mengenverhältnissen sowie den physikalischen und chemischen Eigenschaften der zu vermischenden Komponenten A, B, C und D ab. Nur beispielhaft seien die Viskositäten der Schmelzen von Elastomerkomponente A' und thermoplastischem Polymeren B sowie (falls in diesem Teil des Extruders zudosiert) der Komponenten C und/oder D, die Erweichungstemperaturen der Komponenten, ihre thermische Belastbarkeit bzw. Zersetzungsneigung bei höheren Temperaturen, die Verträglichkeit im Sinne einer Mischbarkeit bzw. Benetzbarkeit der Komponenten, der Restwassergehalt der Polymermischung aus Elastomerkomponente A' und thermoplastischem Polymeren B und gegebenenfalls den Bestandteilen C und D, und, im Falle von partikelförmigen Bestandteilen, deren Teilchengröße und Teilchengrößenverteilung genannt.

Dem letzten Plastifizierungsabschnitt folgen ein oder mehrere Entgasungsabschnitte 6 bzw. 6', die jeweils mit einer oder mehreren Entgasungsöffnungen versehen sind. In den Entgasungsabschnitten wird das verbliebene Restwasser, welches in den Abquetschabschnitten noch nicht mechanisch entfernt wurde, teilweise oder vollständig entfernt. Wegen der üblicherweise über 100°C liegenden Temperaturen der Polymerschmelze tritt das Wasser zumeist vollständig als Dampf aus. Die zur Verdampfung des Wassers notwendige Energie wurde bereits in den Plastifizierungsabschnitten eingebracht.

Die Entgasungsöffnungen befinden sich bevorzugt an der Oberseite des Extruders. Jedoch sind auch andere Anordnungen möglich, siehe hierzu die Ausführungen zur Position der Zufuhröffnungen für die Schmelze des thermoplastischen Polymeren B, die sinngemäß auch für die Entgasungsöffnungen gelten.

Die Entgasungsöffnungen können unter Normaldruck, unter Vakuum oder unter Überdruck betrieben werden, wobei alle Entgasungsöffnungen gleichen oder unterschiedlichen Druck aufweisen können. Im Falle eines Vakuums beträgt der Absolutdruck üblicherweise 100 bis 500 mbar; bei einer Entgasung unter Überdruck wird in der Regel bis zu 20 bar Absolutdruck eingestellt. Bevorzugt ist es jedoch, die Entgasungsabschnitte unter Normaldruck zu betreiben.

Die Anzahl der Entgasungsabschnitte sowie die Zahl, Anordnung und Dimensionierung der Entgasungsöffnungen richtet sich nach dem Wassergehalt des in die Entgasungsabschnitte eintretenden Polymeren und dem gewünschten Wasseranteil im Endprodukt. In einer bevorzugten Ausführungsform wird ein Extruder mit zwei Entgasungsabschnitten verwendet.

Die Entgasungsöffnungen der Entgasungsabschnitte können mit Vorrichtungen, z.B. Rückhalteschnecken, versehen sein, die ein Austreten des geförderten Materials durch die Öffnungen aus dem Extruder verhindern.

Nachdem eine erhebliche Menge des in der Elastomerkomponente A enthaltenen Restwassers bereits in den Abquetschabschnitten 3 und 3' entfernt wurde, werden in allen Entgasungsabschnitten 6 und 6' zusammengenommen nur etwa 10 bis 60, bevorzugt 20 bis 50 Gew.-% des vor der Extrusion in der Elastomerkomponente A enthaltenen Restwassers entfernt.

Im Bereich der Entgasungsabschnitte sind die Extruderschnecken in der Regel als übliche Förderschnecken ausgebildet, wie sie bereits für die Dosierabschnitte beschrieben wurden.

Der letzte Abschnitt des Extruders ist die Austragzone 7. Sie besteht aus einer Förderschnecke und einem geschlossenen Gehäuseteil, das mit einer definierten Austragsöffnung abgeschlossen ist.

In einer besonderen Ausführungsform werden in mindestens einem der Entgasungsabschnitte oder nach dem letzten Entgasungsabschnitt in der Austragszone nochmals oder erstmals die Komponente C und/oder die Komponente D mit den bereits beschriebenen Dosierorganen dem Extruder zugeführt. In diesem Fall ist der Extruder in den Entgasungsabschnitten und/oder in der Austragszone zweckmäßigerweise mit den bei der Beschreibung des Plastifizierungsabschnittes 5 beispielhaft genannten Durchmischungs-, Knet- und/oder Plastifizierungselementen versehen. Die Zugabe der Komponenten C und/oder D kann gemeinsam durch mindestens eine oder getrennt durch mehrere Zufuhröffnungen erfolgen.

Bevorzugt wird als Austragsöffnung ein Düsenkopf verwendet, der beispielsweise als Düsenplatte oder Düsenleiste ausgebildet ist, wobei die Düsen kreisförmig (Lochdüsenplatte), schlitzförmig oder in anderer Weise gestaltet sein können. Das im Falle einer Düsenplatte als Strang ausgetragene Produkt wird wie üblich, z.B. in Wasser abgekühlt und granuliert. Speziell bei Verwendung einer Schlitzdüse ist Würfelgranulierung möglich.

In einer besonderen Ausführungsform wird statt der oben beschriebenen Düsenleiste mit der sonst üblichen Kombination aus Strangabzug, Wasserbad und Granulator ein besonderer Düsenkopf mit anschließender Unterwassergranulierung eingesetzt. Hierbei tritt die Polymerschmelze durch eine Düsenplatte mit bevorzugt kreisförmig angeordneten runden Bohrungen, wird von rotierenden Messern abgetrennt und in Wasser abgekühlt, wobei das Polymer zu mehr oder weniger runden, perlförmigen Körnern erstarrt. Bei der Anordnung der Bohrungen sind jedoch auch andere als kreisförmige Anordnungen und andere als runde Lochformen gebräuchlich.

In einer weiteren Ausführungsform wird statt des Austrags über Düsenleiste, Wasserbadkühlung und Granulierung ein Heißabschlagsverfahren eingesetzt, wobei die aus dem Düsenkopf austretende Polymerschmelze nicht durch Flüssigkeit gekühlt, sondern nach Austritt aus dem Düsenkopf nach kurzer Luftkühlung noch im heißen Zustand zerkleinert (granuliert) wird. Das entstehende Granulat wird danach weiter gekühlt oder kühlt bei der Weiterverarbeitung ab, sofern dies notwendig ist. Es ist auch die Weiterverarbeitung im heißen Zustand oder die Direktextrusion von Platten, Folien, Rohren und Profilen möglich.

In einer weiteren besonderen Ausführungsform ist die Austragszone 7 mit einer Vorrichtung zur Filtration der aus dem Extruder austretenden Schmelze versehen, die sich vor dem Düsenkopf befindet. Derartige Vorrichtungen zur kontinuierlichen Schmelzefiltration sind dem Fachmann bekannt und handelsüblich. Man kann, falls notwendig, zwischen Austragszone und Schmelzefiltration ein Förderorgan installieren, beispielsweise eine Schmelzepumpe oder einen Schneckenförderer, um in der Schmelze den zum Passieren der Filtereinheit notwendigen Druck aufzubauen.

Die aus der Filtrationsvorrichtung austretende Schmelze wird granuliert bzw. auf andere Art weiterverarbeitet, wie es bereits beschrieben wurde.

Der Wassergehalt des ausgetragenen Polymeren (die "Strangfeuchte") beträgt in der Regel 0,05 bis 1,5 Gew.-%, bezogen auf dieses Polymere. Die Temperatur der aus der Austragsöffnung austretenden Polymerschmelze beträgt in der Regel 180 bis 350°C, je nach Art der eingesetzten Polymeren.

Wie allgemein bekannt ist, können die verschiedenen Zonen eines Extruders individuell geheizt oder gekühlt werden, um entlang der Schneckenachse ein optimales Temperaturprofil einzustellen. Weiterhin ist dem Fachmann geläufig, daß üblicherweise die einzelnen Abschnitte des Extruders verschieden lang sein können.

Die im Einzelfall zu wählenden Temperaturen und Längen der einzelnen Abschnitte unterscheiden sich in Abhängigkeit der beispielhaft bereits erwähnten chemischen und physikalischen Eigenschaften der Komponenten und deren Mengenverhältnissen.

Gleiches gilt auch für die Schneckendrehzahl, die innerhalb eines weiten Bereiches variieren kann. Nur beispielhaft sei eine Drehzahl der Extruderschnecken im Bereich von 50 bis 500 min$^{-1}$ genannt. Bevorzugt ist ein Drehzahlbereich von 100 bis 350 min$^{-1}$.

Es ist vorteilhaft, den Extruder so auszugestalten und zu betreiben, daß sich, bei einer Schneckendrehzahl von 100 bis 350 min$^{-1}$, im Bereich der Abquetschabschnitte mittlere Schergeschwindigkeiten von 180 bis 220 s$^{-1}$ einstellen. Jedoch kann es je nach Art, Menge und Eigenschaften der verwendeten Komponenten zweckmäßig sein, bei mittleren Schwergeschwindigkeiten außerhalb dieses Bereiches zu arbeiten.

Der Durchmesser der beiden Extruderschnecken kann, wie allgemein üblich, über die Länge der gesamten Schnecke konstant sein. In einer bevorzugten Ausführungsform bestehen die Schnecken jedoch aus zwei Abschnitten unterschiedlichen Durchmessers, wobei der zweite (stromabwärts) befindliche Abschnitt den größeren Durchmesser hat.

Die Änderung des Schneckendurchmessers kann sprunghaft, d.h. innerhalb eines sehr kurzen Bereiches der Schnecke, oder allmählich sein. Sie erfolgt in einem Bereich nach dem Ende des Abschnittes 4, in dem die Schmelze des thermoplastischen Polymeren B zugeführt wird, und vor dem Beginn des ersten Entgasungsabschnittes 6. Bevorzugt erfolgt die Durchmesseraufweitung sprunghaft, und bevorzugt befindet sich die Aufweitung direkt vor dem Beginn des ersten Entgasungsabschnittes.

In der Regel beträgt der Durchmesser des zweiten Schneckenabschnittes das 1,02 bis 1,20 und bevorzugt das 1,04 bis 1,15-fache des Durchmessers des ersten Schneckenabschnittes. Mit dem Schneckendurchmesser ändern sich die Gehäusedurchmesser entsprechend.

In einer bevorzugten Ausführungsform geht mit der Änderung des Schneckendurchmessers eine Änderung der Gangzahl der Schnecke einher. Der vordere Schneckenabschnitt kleineren Durchmessers ist bevorzugt dreigängig, der hintere Abschnitt größeren Durchmessers dagegen in der Regel zweigängig. Jedoch kann die Schnecke auch eingängige Abschnitte aufweisen.

Als Elastomerkomponente A kann jedes Polymere eingesetzt werden, das elastomere Eigenschaften hat und einem Extruder zugeführt werden kann. Es kann auch eine Mischung verschiedener Elastomerkomponenten A eingesetzt werden.

Insbesondere werden als Komponente A, wie eingangs erwähnt, partikelförmige Kautschuke verwendet. Besonders bevorzugt sind solche Kautschuke, die eine aufgepfropfte Hülle aus anderen, in der Regel nicht elastomeren Polymeren aufweisen. Die dem Extruder als teilentwässertes Material zugeführten Pfropfkautschuk-Typen enthalten in einer bevorzugten Ausführungsform der Erfindung bis zu 50, besonders bevorzugt 25 bis 40 Gew.-% Restwasser.

Eine Ausführungsform der Erfindung besteht in einem Verfahren, bei dem als Elastomerkomponente A zwei- oder mehrstufig aufgebaute Pfropfkautschuke verwendet werden, bei denen die elastomeren Grund- oder Pfropfstufen durch Polymerisation eines oder mehrerer der Monomeren Butadien, Isopren, Chloropren, Styrol, Alkylstyrol, $C_1$- bis $C_{10}$-Alkylester der Acrylsäure oder der Methacrylsäure sowie geringen Mengen anderer, auch vernetzender Monomeren erhalten werden, und bei denen die harten Pfropfstufen aus einem oder mehreren der Monomeren Styrol, Alkylstyrol, Acrylnitril, Methylmethacrylat polymerisiert werden.

Bevorzugt sind Pfropfpartikel A aus Polymeren auf Basis von Butadien/Styrol/Acrylnitril, n-Butylacrylat/Styrol/Acrylnitril, Butadien/n-Butylacrylat/Styrol/Acrylnitril, n-Butylacrylat/Styrol/Methylmethacrylat, Butadien/Styrol/Acrylnitril/Methylmethacrylat und Butadien/n-Butylacrylat/Methylmethacrylat/Styrol/Acrylnitril. In Kern oder Schale können bis zu 10 Gew.-% funktionelle Gruppen tragende, polare Monomere einpolymerisiert sein.

In dieser Ausführungsform werden als thermoplastische Polymere B Styrol-Acrylnitril-(SAN)-Copolymere, Polystyrol, Polymethylmethacrylat, Polyvinylchlorid oder Mischungen dieser Polymere eingesetzt.

Dabei sind SAN-Polymere, Polymethylmethacrylat (PMMA) oder Mischungen dieser Polymere bevorzugt.

Weiterhin können als thermoplastische Polymere B auch Polycarbonat, Polybutylenterephthalat, Polyethylenterephthalat, Polyoxymethylen, Polymethylmethacrylat, Polyphenylensulfid, Polysulfone, Polyethersulfone und Polyamide und Mischungen dieser Thermoplasten eingesetzt werden.

Ebenso kann man als Komponente B Copolymere auf Basis von Styrol/Maleinsäureanhydrid, Styrol/imidiertem Maleinsäureanhydrid, Styrol/Maleinsäureanhydrid/imidiertem Maleinsäureanhydrid, Styrol/Methylmethacrylat, Styrol/Methylmethacrylat/Maleinsäureanhydrid, Methylmethacrylat/imidiertem Maleinsäureanhydrid, Styrol/imidiertem Methylmethacrylat, imidiertem PMMA oder Mischungen dieser Polymere verwenden.

Bei allen genannten thermoplastischen Polymeren B kann das Styrol ganz oder teilweise durch $\alpha$-Methylstyrol oder kernalkylierte Styrole ersetzt sein.

Von den zuletzt genannten Polymeren B sind solche auf Basis von $\alpha$-Methylstyrol/Acrylnitril, Styrol/Maleinsäureanhydrid, Styrol/Methylmethacrylat und Copolymere mit imidiertem Maleinsäureanhydrid bevorzugt.

Bekannte Beispiele für die Elastomerkomponente A sind Polymerisate von konjugierten Dienen wie Butadien, mit einer äußeren Pfropfhülle auf Basis einer vinylaromatischen Verbindung wie etwa SAN-Copolymeren. Gleichfalls bekannt sind Pfropfkautschuke auf Basis von vernetzten Polymerisaten aus $C_1$- bis $C_{10}$-Alkylestern der Acrylsäure wie n-Butylacrylat, Ethylhexylacrylat, gepfropft mit Polymeren auf der Grundlage vinylaromatischer Verbindungen wie SAN-Copolymeren. Gebräuchlich sind auch Pfropfkautschuke, die im wesentlichen ein Copolymerisat aus konjugierten Dienen und $C_1$- bis $C_{10}$-Alkylacrylaten, beispielsweise ein Butadien-n-Butylacrylat-Copolymerisat, und eine äußere Pfropfstufe aus SAN-Copolymer, Polystyrol oder PMMA enthalten.

Die Herstellung solcher Pfropfkautschuke nach den üblichen Verfahren, insbesondere durch Emulsions- oder Suspensionspolymerisation, ist bekannt.

Pfropfkautschuke auf Basis von SAN-gepfropftem Polybutadien sind beispielsweise in den Schriften DT 24 27 960 und EP-A 258 741 beschrieben, solche auf Basis von SAN-gepfropftem Poly-n-Butylacrylat in DE-AS 12 60 135 und DE-OS 31 49 358. Näheres zu SAN-gepfropften Poly(Butadien/n-Butylacrylat)-Mischkautschuken ist der EP-A 62 901 zu entnehmen.

Als thermoplastische Polymere B werden im Falle der im letzten Absatz genannten Pfropfkautschuke Copolymere aus Styrol und Acrylnitril verwendet. Sie sind bekannt und z.T. auch handelsüblich und haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse von etwa 40000 bis 2000000.

Bevorzugt werden die thermoplastischen Polymeren B durch kontinuierliche Substanz- oder Lösungspolymerisation hergestellt, wobei die erhaltene Schmelze, gegebenenfalls nach Entfernung der Lösungsmittel, beispielsweise mit einer Schmelzepumpe kontinuierlich direkt dem Extruder zugeführt wird. Jedoch ist auch eine Herstellung durch Emulsions-, Suspensions- oder Fällungspolymerisation möglich, wobei in einem zusätzlichen Arbeitsschritt das Polymere von der flüssigen Phase getrennt wird.

Einzelheiten der Herstellungsverfahren sind z.B. im Kunststoffhandbuch, Hrg. R. Vieweg und G. Daumiller, Bd. V "Polystyrol", Carl-Hanser-Verlag, München, 1969, S. 118 ff beschrieben.

Ist die Elastomerkomponente A ein SAN-gepfropftes Polybutadien, so entsteht durch Einarbeiten des SAN eine Formmasse, die als ABS (Acrylnitril/Butadien/Styrol) bekannt ist. Wird als Komponente A ein SAN-gepfropftes Alkylacrylat verwendet, so entstehen sog. ASA-Formmassen (Acrylnitril/Styrol/Acrylat).

In einer anderen Ausführungsform werden Pfropfkautschuke mit bis zu 60 Gew.-% Restwassergehalt auf Basis von Polydienen und/oder Polyalkylacrylaten sowie SAN und/oder PMMA eingesetzt, die aus mehr als zwei Pfropfstufen aufgebaut sind.

Beispiele für solche vielstufigen Pfropfpartikel sind Teilchen, die als Kern ein Polydien und/oder Polyalkylacrylat, als erste Hülle ein Polystyrol oder SAN-Polymeres und als zweite Hülle ein anderes SAN-Polymeres mit einem veränderten Gewichtsverhältnis Styrol : Acrylnitril enthalten, oder auch Teilchen aus einem Polystyrol-, Polymethylmethacrylat- oder SAN-Polymerisat-Kern, einer ersten Hülle aus Polydien und/oder Polyalkylacrylat und einer zweiten Hülle aus Polystyrol, Polymethylmethacrylat oder SAN-Polymer. Weitere Beispiele sind Pfropfkautschuke aus einem Polydienkern, einer oder mehreren Polyalkylacrylathüllen und einer oder mehreren Polymer-Hüllen aus Polystyrol, Polymethylmethacrylat oder SAN-Polymer oder analog aufgebaute Pfropfkautschuke mit Acrylatkern und Polydienhüllen.

Ferner sind Copolymerisate mit mehrstufigem Kern-Schale-Aufbau aus vernetztem Alkylacrylat, Styrol, Methylmethacrylat und einer äußeren Schale aus PMMA gebräuchlich.

Solche mehrstufigen Pfropfkautschuke sind z.B. in DE-OS 31 49 046 beschrieben. Pfropfkautschuke auf Basis von n-Butylacrylat/Styrol/Methylmethacrylat mit einer Hülle aus PMMA werden z.B. in EP-A 512 333 beschrieben, wobei auch jeder anderen dem Stand der Technik entsprechende Aufbau solcher Pfropfkautschuke möglich ist.

Derartige Kautschuke werden als schlagzäh machende Komponente für Polyvinylchlorid und bevorzugt für schlagzähes PMMA eingesetzt.

Als thermoplastische Polymere B werden bevorzugt wiederum die genannten SAN-Copolymere und/oder PMMA verwendet.

Ist die Elastomerkomponente A ein mehrschalig aufgebautes Kern/Schale-Polymer auf Basis n-Butylacrylat/Methylmethacrylat, und das Polymere B PMMA, so erhält man demnach schlagzähes PMMA.

Der Durchmesser der partikelförmigen Pfropfkautschuke beträgt 0,05 bis 20 μm. Handelt es sich um die allgemein bekannten Pfropfkautschuke kleinen Durchmessers, so beträgt er bevorzugt 0,08 bis 1,5 und besonders bevorzugt 0,1 bis 0,8 μm.

Bei den zweckmäßigerweise mittels Suspensionspolymerisation hergestellten großteiligen Pfropfkautschuken ist der Durchmesser bevorzugt 1,8 bis 18 und insbesondere 2 bis 15 μm. Derartige Pfropfkautschuke großen Durchmessers lehrt beispielsweise die DE-OS 44 43 886.

Bevorzugte Komponente B sind auch in dieser Ausführungsform die genannten SAN-Copolymere, Polystyrol und/oder PMMA.

Bei der Komponente C handelt es sich um thermoplastische Polymere. Diese können aus den gleichen Monomeren aufgebaut sein wie die thermoplastischen Polymere B oder aus anderen Monomeren. Sind die Monomeren, aus denen die Polymere B und C aufgebaut sind, identisch, so unterscheiden sich die Komponenten B und C in der Regel durch die Mengenanteile der Monomere - beispielsweise können die Polymere B und C Styrol-Acrylnitril-Copolymere sein, die sich im Styrol:Acrylnitril-Verhältnis unterscheiden. Falls auch die Mengenanteile der Monomeren identisch sind, unterscheiden sich die Polymere B und C durch ihre verschiedenen mittleren Molmassen $\overline{M}_w(B)$ und $\overline{M}_w(C)$, meßbar beispielsweise als verschiedene Viskositätszahlen VZ(B) und VZ(C).

Als Monomere zur Herstellung von C können neben den für die Komponente B genannten Monomeren Styrol, Acrylnitril, Methylmethacrylat und Vinylchlorid auch folgende andere Verbindungen als wesentliche Bestandteile verwendet werden:

- α-Methylstyrol und $C_1$ bis $C_8$-kernalkylierte Styrole bzw. α-Methylstyrole,
- Methacrylnitril,
- $C_1$ bis $C_{20}$-Alkylester der Acrylsäure und der Methacrylsäure
- Maleinsäure, Maleinsäureanhydrid, sowie Maleinsäureimide

- Vinylether, Vinylformamid.

Beispielhaft seien für die Komponente C Polymere auf Basis $\alpha$-Methylstyrol/Acrylnitril und Methylmethacrylat/Alkylacrylat, sowie Copolymere aus Alkylestern der Acrylsäure oder der Methacrylsäure und Styrol bzw. Acrylnitril bzw. Styrol und Acrylnitril genannt.

Die Herstellung dieser Polymere ist dem Fachmann bekannt.

Weiterhin kann die Komponente C im wesentlichen aus Copolymeren von $C_2$ bis $C_8$-Alkenen wie Ethylen, Propen und Buten mit

- Vinylaromaten,
- polaren Comonomeren wie Acrylsäure und Methacrylsäure, den $C_1$ bis $C_{10}$-Alkylestern der Acrylsäure und der Methacrylsäure,
- anderen mono- oder polyfunktionellen ethylenisch ungesättigten Säuren wie Maleinsäure, Maleinsäureanhydrid, Fumarsäure, Itaconsäure sowie deren Estern, insbesondere Glycidylestern, Estern mit $C_1$ bis $C_8$-Alkanolen und Estern mit arylsubstituierten $C_1$ bis $C_8$-Alkanolen,
- Kohlenstoffmonoxid,
- nichtaromatischen Vinylverbindungen wie Vinylacetat, Vinylpropionat und Vinylalkylether,
- basischen Monomeren wie Hydroxyethylacrylat, Dimethylaminoethylacrylat, Vinylcarbazol, Vinylanilin, Vinylcaprolactam, Vinylpyrrolidon, Vinylimidazol und Vinylformamid,
- Acrylnitril, Methacrylnitril

bestehen, die in allgemein bekannter Weise hergestellt werden.

In einer bevorzugten Ausführungsform wird ein Polymeres C verwendet, das aus 40 bis 75 Gew.-% Ethylen, 5 bis 20 Gew.-% Kohlenstoffmonoxid und 20 bis 40 Gew.-% n-Butylacrylat herstellbar ist (als Elvaloy$^®$ HP-4051 (Fa. DuPont) im Handel erhältlich), oder ein Polymeres, das aus 50 bis 98,9 Gew.-% Ethylen, 1 bis 45 Gew.-% n-Butylacrylat und 0,1 bis 20 Gew.-% einer oder mehreren Verbindungen ausgewählt aus der Gruppe Acrylsäure, Methacrylsäure und Maleinsäureanhydrid, herstellbar ist.

Die Herstellung der letztgenannten Ausführungsformen erfolgt üblicherweise durch radikalische Polymerisation und ist in den Schriften US 2 897 183 und US 5 057 593 beschrieben.

Außerdem sind Copolymere aus Butadien oder substituierten Butadienen mit Styrol, Methylmethacrylat oder Acrylnitril geeignet, beispielsweise Nitrilkautschuk (NBR) oder Styrol-Butadien-Kautschuk (SBR).

Ebenso sind als Komponente C Copolymere aus Butadien und Styrol mit Blockstrukturen geeignet. Sie werden bevorzugt nach der Methode der anionischen Polymerisation in Lösung unter Verwendung metallorganischer Verbindungen wie sek.-Butyllithium hergestellt, wobei lineare Blockkautschuke beispielsweise des Aufbaus Styrol/Butadien (Zweiblock) oder Styrol/Butadien/Styrol (Dreiblock) entstehen. Diese Blöcke können von Polymeren mit statistischer Verteilung voneinander getrennt sein, und ferner können die Blöcke auch in untergeordneten Mengen Einheiten des jeweils anderen Monomeren enthalten.

Bei Mitverwendung geringer Mengen eines Ethers, insbesondere Tetrahydrofuran (THF) neben dem Initiator, entstehen Polymerketten, welche, von einem Butadien-reichen Ausgangssegment ausgehend, entlang der Kette einen steigenden Styrolgehalt aufweisen und schließlich in einem Homo-Polystyrol-Endsegment enden. Einzelheiten des Herstellungsverfahrens sind in der DE-A 31 06 959 beschrieben. Auch derart aufgebaute Polymere C sind gut geeignet.

Ebenfalls gut geeignet als Komponente C sind Polymere mit sternförmiger Struktur, die man durch Verknüpfung mehrerer Polymerketten, hauptsächlich von Dreiblockpolymerisaten des Typs Styrol/Butadien/Styrol, über polyfunktionelle Moleküle erhält. Geeignete Verknüpfungsmittel sind z.B. Polyepoxide, beispielsweise epoxidiertes Leinsamenöl, Polyisocyanate wie Benzo-1,2,4-triisocyanat, Polyketone wie 1,3,6-Hexantrion und Polyanhydride, außerdem Dicarbonsäureester wie Diethyladipat, sowie Siliciumhalogenide wie $SiCl_4$, Metallhalogenide wie $TiCl_4$ und Polyvinylaromaten wie Divinylbenzole. Näheres über die Herstellung dieser Polymeren ist z.B. der DE-A 26 10 068 zu entnehmen.

Neben der Elastomerkomponente A und den Polymeren B und C können die nach dem erfindungsgemäßen Verfahren hergestellten Formmassen als weitere Komponente D Zusatzstoffe, beispielsweise Wachse, Weichmacher, Gleit- und Entformungsmittel, Pigmente, Farbstoffe, Flammschutzmittel, Antioxidantien, Stabilisatoren gegen Lichteinwirkung und thermische Schädigung, faser- und pulverförmige Füll- und Verstärkungsmittel und Antistatika in den für diese Mittel üblichen Mengen enthalten.

Die Polymeren C und die Zusatzstoffe D können in einem oder mehreren der genannten Extruderabschnitte dem Extruder zugeführt werden. In einer bevorzugten Ausführungsform werden die Komponenten C und D - getrennt von der Elastomerkomponente A und dem thermoplastischen Polymeren B - im Entlüftungsabschnitt 1 und/oder im Abschnitt 4, in dem das Polymere B dem Extruder zugeführt wird, in den Extruder eingeführt. Die Bestandteile C und D können in den bzw. die gleichen Abschnitte oder jeweils in verschiedene Extruderabschnitte eindosiert werden, und

EP 0 734 826 B1

man kann sowohl C als auch D zu 100 % in einem Abschnitt oder verteilt auf mehrere Abschnitte dem Extruder zuführen.

Die genaue Ausgestaltung der Zufuhr von C und D hängt ab von den erwähnten physikalischen und chemischen Eigenschaften der Komponenten A bis D und deren Mengenverhältnissen. So können beispielsweise Zusatzstoffe D mit geringer thermischer Beständigkeit erst in der Austragszone dem Extruder zugeführt werden, wodurch ein thermischer Abbau der Stoffe D weitgehend verhindert wird.

Die mit dem Verfahren hergestellten thermoplastischen Formmassen können mit den allgemein üblichen Verfahren zu Formkörpern verarbeitet werden. Beispielhaft seien Extrusion (für Rohre, Profile, Fasern, Folien und Platten), Spritzgießen (für Formteile aller Art) sowie Kalandrieren und Walzen (für Platten und Folien) genannt.

Ein wesentlicher Vorteil des erfindungsgemäßen Verfahrens ist, daß ein erheblicher Teil des Restwassers, welches in der teilentwässerten Elastomerkomponente A enthalten ist, bereits in den Abquetschzonen mechanisch entfernt wird, weshalb in den nachfolgenden Extruderabschnitten weniger thermische Energie zur Verdampfung des verbliebenen Wassers angewendet werden muß. Es resultiert eine deutliche Energieeinsparung.

Ein weiterer Vorteil des erfindungsgemäßen Verfahrens liegt darin, daß der Extruder bei niedrigeren Temperaturen betrieben werden kann als beispielsweise gemäß dem in der EP-A 534 235 beschriebenen Verfahren, so daß die Elastomerkomponente A und das aus den Bestandteilen A, B, C und D bestehende Polymere schonender verarbeitet wird. Weiterhin kann auf druckaufbauende Schneckenelemente im Entgasungsteil, die das Polymere thermisch und mechanisch stark beanspruchen, in der Regel verzichtet werden.

Durch das Einarbeiten einer teilentwässerten Elastomerkomponente A in die Schmelze eines thermoplastischen Polymeren B und das Zumischen weiterer Polymere C sowie von Zusatzstoffen D lassen sich, Verträglichkeit oder zumindest Teilverträglichkeit der Elastomerkomponente mit den anderen Komponenten und ausreichende thermische Beständigkeit vorausgesetzt, kautschukmodifizierte thermoplastische Formmassen verschiedenster Art und Additivierung herstellen.

Gegenüber den aus dem Stand der Technik bekannten Verfahren hat das erfindungsgemäße Verfahren weiterhin den Vorteil, daß keine verstopfungsanfälligen Seihergehäuse verwendet werden.

Die erfindungsgemäße Anordnung des Extruders kann kostensparend unter Hilfenahme von marktüblichen Extruderbauteilen nach dem Baukastenprinzip aufgebaut werden. Solche Bauteile sind in Form unterschiedlich ausgestalteter Schnecken- und zugehörigen Gehäuseabschnitten, sog. "Schüssen", verfügbar und ermöglichen eine genaue Anpassung des Extruders an das spezielle Konfektionierungsproblem.

Beispiele

a) Extruder

Es wird ein Zweischneckenextruder des Typs ZSK 53 von Fa. Werner und Pfleiderer, Stuttgart, eingesetzt, der aus 13 Schüssen aufgebaut ist. Ihre Anordnung ist stromab wie folgt (in Klammern ist die in der Beschreibung verwendete Bezeichnung der Extruderabschnitte angegeben):

Schuß 0: Länge 3 D$_v$, unbeheizt, mit obenliegender Entlüftungsöffnung, die mit einer Dosiereinrichtung ESB 45 von Fa. Werner und Pfleiderer versehen ist, welche die weiteren Polymere C zuführt. (Entlüftungsabschnitt 1).

Schuß 1: Länge 3 D$_v$, unbeheizt, mit oberliegender Dosieröffnung, die mit einer Dosiereinrichtung ESB 45 versehen ist (Dosierabschnitt 2 für Elastomerkomponente A).

Schuß 2: Länge 3 D$_v$, unbeheizt, mit obenliegender Entwässerungsöffnung, die mit einer Rückhalteschnecke versehen ist (erster Abquetschabschnitt 3, vorderer Teil).

Schuß 3: Länge 3 D$_v$, unbeheizt, ohne Öffnungen, enthält Stauelemente (erster Abquetschabschnitt 3, hinterer Teil).

Schuß 4: Länge 3 D$_v$, unbeheizt, ohne Öffnungen, mit fördernder Schnecke (zweiter Abquetschabschnitt 3', vorderer Teil).

Schuß 5: Länge 3 D$_v$, unbeheizt, mit obenliegender Entwässerungsöffnung, die mit einer Rückhalteschnecke versehen ist

12

(zweiter Abquetschabschnitt 3', mittlerer Teil).

Schuß 6: Länge 3 $D_v$, unbeheizt, ohne Öffnungen, enthält Stauelemente sowie einen Schneckenabschnitt mit Knetblöcken (zweiter Abquetschabschnitt 3', hinterer Teil).

Schuß 7: Länge 3 $D_v$, beheizt auf 240°C, mit Öffnungen, durch die Zusatzstoffe D eingebracht werden, mit fördernder Schnecke
(Abschnitt 4, in dem die Schmelze des thermoplastischen Polymeren B zugeführt wird, vorderer Teil).

Schuß 8: Länge 3 $D_v$, beheizt auf 240°C, mit seitlicher Öffnung, durch die mittels einer Rohrleitung via Schmelzepumpe die Schmelze des Polymeren B eingebracht wird, sowie weiteren Öffnungen, durch die die weiteren Polymere C und die Zusatzstoffe D eingebracht werden (Abschnitt 4, in dem die Schmelze des thermoplastischen Polymeren B zugeführt wird, hinterer Teil)
und einen Schneckenabschnitt, der Knetblöcke enthält (erster Plastifizierungsabschnitt 5).

Schuß 9: Länge 3 $D_v$, beheizt auf 240°C, ohne Öffnungen, mit einem Schneckenabschnitt, der Knetblöcke enthält (zweiter Plastifizierungsabschnitt 5').

Schuß 10: Länge 3 $D_H$, beheizt auf 240°C, mit obenliegender Entgasungsöffnung und Förderschnecke, wird unter Normaldruck betrieben
(erster Entgasungsabschnitt 6).

Schuß 11: Länge 3 $D_H$, beheizt auf 240°C, mit obenliegender Entgasungsöffnung und Förderschnecke, wird unter Normaldruck betrieben
(zweiter Entgasungsabschnitt 6').

Schuß 12: Länge 3 $D_H$, beheizt auf 240°C, ohne Öffnungen und mit Förderschnecke
(Austragzone 7, vorderer Teil).

Abschluß: Düsenleiste mit zylindrischen Bohrungen
(Austragszone 7, hinterer Teil).

Im vorderen Bereich der Schnecke - Schüsse 0 bis 9 - beträgt der Schneckendurchmesser $D_v$ = 53 mm und die Schnecke ist dreigängig ausgeführt. Im hinteren Bereich der Schnecke - Schüsse 10 bis 12 - ist der Schneckendurchmesser $D_H$ = 57 mm und die Schnecke ist zweigängig. "Schnecke" bezeichnet jeweils die Doppelschnecke, also beide Schnecken.

b) verwendete Polymerkomponenten

Als Elastomerkomponente A wurden die folgenden Pfropfkautschuke eingesetzt:

A-1: Pfropfkautschuk Typ Polybutadien (Kern)/Styrol-Acrylnitril (Schale)
Butadien wurde in Emulsion polymerisiert, der erhaltene Latex agglomeriert, wobei ein Latex mit einer mittleren Teilchengröße $d_{50}$ von 238 nm entstand, und anschließend mit einem Gemisch von Styrol und Acrylnitril pfropfpolymerisiert. Näheres ist der DE-AS 24 27 960, Sp. 6, Z. 17 bis Sp. 7, Z. 27, zu entnehmen, wobei das ausgefällte Pfropfpolymerisat jedoch abgesaugt und mittels eines Stromtrockners auf einen Restwassergehalt von 28 bis 30 Gew.-% (je nach Charge) entwässert wurde.
A-2: Propfkautschuk Typ Polybutylacrylat (Kern)/Styrol (erste Stufe)/Styrol-Acrylnitril (zweite Stufe)
n-Butylacrylat wurde mit Dihydrodicyclopentadienylacrylat als Vernetzer in Emulsion in zwei Schritten zu einem Latex mit einem mittleren Teilchendurchmesser $d_{50}$ von 410 nm polymerisiert. Auf diesen Latex wurde eine erste Stufe aus Polystyrol und eine zweite Stufe aus Styrol-Acrylnitril-Copolymer pfropfpolymerisiert. Bezüglich der Einzelheiten sei auf die DE-OS 31 49 358, S. 15, Z. 12 bis S. 16, Z. 24, verwiesen, wobei mittels eines Stromtrockners getrocknet wurde. Der Restwassergehalt betrug 34,4 Gew.-%.

Als thermoplastisches Polymeres B wurde ein Copolymerisat aus 65 Gew.-% Styrol und 35 Gew.-% Acrylnitril nach dem Verfahren der kontinuierlichen Lösungspolymerisation hergestellt, wie es im Kunststoff-Handbuch, Hrg. R. Vieweg und G. Daumiller, Bd. V "Polystyrol", Carl-Hanser-Vertrag München 1969, Seite 122 bis 124, beschrieben ist. Es wurden zwei Polymere B-1 und B-2 mit unterschiedlichen Polymerisationsgraden hergestellt. Die Viskositätszahl VZ (ermittelt nach DIN 53 726 bei 25°C, 0,5 Gew.-% in Dimethylformamid) betrug 80 ml/g (Polymer B-1) bzw. 60 ml/g (Polymer B-2).

Aus den Komponenten A-1 und B entstehen Formmassen, die allgemein als ABS (Acrylnitril/Butadien/Styrol) bekannt sind. Die aus den Komponenten A-2 und B erhaltenen Produkte sind als ASA-Formmassen (Arcylnitril/Styrol/Acrylester) geläufig.

Als weiteres Polymere C wurden die folgenden Polymerisate eingesetzt:

C-1: Copolymerisat aus $\alpha$-Methylstyrol/Acrylnitril

Ein Copolymerisat aus 70 Gew.-% $\alpha$-Methylstyrol und 30 Gew.-% Acrylnitril wurde hergestellt wie für das Polymere B beschrieben. Die Viskositätszahl VZ betrug (Meßbedingungen siehe Polymeres B) 56 ml/g.

C-2: Copolymerisat aus Ethylen/n-Butylacrylat/Kohlenmonoxid

Es wurde ein Copolymerisat aus etwa 55 Gew.-% Ethylen, etwa 15 Gew.-% Kohlenmonoxid und etwa 30 Gew.-% n-Butylacrylat verwendet, im Handel erhältlich als Elvaloy [®] HP-4051 (Fa. DuPont).

C-3: Copolymerisat aus Butadien und Styrol mit Sternstruktur

Es wurde ein Copolymerisat aus Styrol und Butadien nach dem Verfahren der anionischen Polymerisation hergestellt. Die erhaltenen Ketten aus Styrol-Butadien-Styrol-Blockcopolymerisat wurden anschließend mit einem polyfunktionellen Kupplungsreagenz zu einem Polymeren mit überwiegend sternförmiger Struktur verknüpft. Das erhaltene Polymere enthielt 22 Gew.-% Butadieneinheiten und 78 Gew.-% Styroleinheiten. Bezüglich Einzelheiten der Herstellung von C-3 sei auf die DE-A 26 10 068 verwiesen.

Als Zusatzstoffe D wurden verwendet:

D-1: Tris(nonylphenyl)phosphit (TNPP). Es wurde das Produkt Irgafos [®] TNPP (Fa. Ciba-Geigy) verwendet.

D-2: Bis(stearoyl)ethylendiamin.

D-3: Octadecyl-3-(3,5-di-tert.butyl-4-hydroxyphenyl)-propionat. Es wurde das Produkt Irganox [®] 1076 (Fa. Ciba-Geigy) verwendet.

D-4: Farbstoff-Masterbatch, enthaltend 20 Gew.-% Titandioxid und 80 Gew.-% des Styrol-Acrylnitril-Copolymeren Komponente B-1.

Die als feuchtes Pulver vorliegenden Komponenten A wurde dem Extruder über eine Feststoffdosiereinrichtung ESB-45, die Schmelzen der thermoplastischen Polymeren B mittels einer Schmelzepumpe zugeführt. Die Komponenten C lagen als Pulver oder Granulat vor und wurden ebenfalls über eine ESB-45-Dosierung in den Extruder eingebracht. Die flüssige Komponente D-1 wurde mit einer Pumpe zugeführt.

Aus den Komponenten D-2, D-3 und D-4 wurde eine Mischung hergestellt, enthaltend 26 Gew.-% D-2, 7 Gew.-% D-3 und 67 Gew.-% D-4. Diese Mischung wurde gleichfalls mit einer ESB-45-Dosierung in den Extruder gegeben.

c) Messungen

Gemessen wurden der Wasseraustrag und der Kautschukaustrag in der ersten und zweiten Abquetschzone sowie die Strangfeuchte des austretenden Endproduktes. Diese Messungen wurden gravimetrisch vorgenommen.

Die als Dampf ausgetretene Wassermenge wurde durch Differenzbildung des anfänglichen Restwassergehaltes und der Summe des ausgetretenen flüssigen Wassers berechnet.

Aus den Austrägen an Wasser, Dampf und Kautschuk in kg/h wurden Prozentanteile berechnet. Die angegebenen %-Werte sind Gew.-% und beziehen sich für Wasser und Dampf auf den Wassergehalt des dem Extruder zugeführten Kautschuks (mit * markierte Zeile), der gleich 100 gesetzt wurde, und für Kautschuk auf die zugeführte Menge des feuchten Kautschuks (mit ** markierte Zeile), die gleich 100 gesetzt wurde. Die Strangfeuchte ist auf das erhaltene Endprodukt bezogen.

Tabelle

| Beispiel | 1 | 2 |
|---|---|---|
| Elastomerkomponente A<br>Art<br>Wassergehalt [Gew.-%]*<br>Zufuhr [kg/h]**<br>in Schuß Nr. | A-1<br>28,0<br>32,0<br>1 | A-1<br>30,0<br>57,0<br>1 |
| thermoplastisches Polymeres B<br>Art<br>Zufuhr [kg/h]<br>in Schuß Nr. | B-2<br>77,0<br>8 | B-2<br>22,0<br>8 |
| weiteres Polymeres C<br>Art<br>Zufuhr [kg/h]<br>in Schuß Nr. | – | C-1<br>44,0<br>8 |
| Zusatzstoffe D<br>Art<br>Zufuhr [kg/h]<br>in Schuß Nr. | D-1  D-2/3/4[3]<br>0,3    4,5 [4]<br>7      8 | – |
| Extruder-Drehzahl [min$^{-1}$] | 300 | 300 |
| 1. Abquetschabschnitt<br>Austrag Wasser [kg/h] [1]<br>Austrag Kautschuk [kg/h] [2] | 4,31 = 48 %<br>0,21 = <1 % | 4,96 = 29 %<br>0,09 = <1 % |
| 2. Abquetschabschnitt<br>Austrag Wasser [kg/h] [1]<br>Austrag Kautschuk [kg/h] [2] | 2,33 = 26 %<br>0,16 = <1 % | 4,11 = 24 %<br>0,19 = <1 % |
| Entgasungsabschnitte<br>Dampfaustrag [kg/h] [1] | 2,33 = 26 % | 8,04 = 47 % |
| Strangfeuchte [Gew.-%] | 0,2 | 0,3 |

[1]   %-Werte bezogen auf Zeile * = 100

[2]   %-Werte bezogen auf Zeile ** = 100

[3]   Mischung aus D-2, D-3 und D-4

[4]   Zufuhr der Mischung, entspricht 1,2 kg/h D-2; 0,3 kg/h D-3; 3,0 kg/h D-4

Tabelle Forts.

| Beispiel | 3 | 4 |
|---|---|---|
| Elastomerkomponente A<br>Art<br>Wassergehalt [Gew.-%]*<br>Zufuhr [kg/h]**<br>in Schuß Nr. | A-2<br>34,4<br>57,0<br>1 | A-2<br>34,4<br>86,8<br>1 |
| thermoplastisches Polymeres B<br>Art<br>Zufuhr [kg/h]<br>in Schuß Nr. | B-1<br>18,0<br>8 | B-1<br>8,8<br>8 |
| weiteres Polymeres C<br>Art<br>Zufuhr [kg/h]<br>in Schuß Nr. | C-2<br>4,8<br>0 | C-3<br>8,8<br>0 |
| Zusatzstoffe D<br>Art<br>Zufuhr [kg/h]<br>in Schuß Nr. | - | - |
| Extruder-Drehzahl [min$^{-1}$] | 300 | 300 |
| 1. Abquetschabschnitt<br>Austrag Wasser [kg/h] [1]<br>Austrag Kautschuk [kg/h] [2] | 11,17 = 57 %<br>2,85 = 5 % | 17,30 = 58 %<br>3,80 = 4 % |
| 2. Abquetschabschnitt<br>Austrag Wasser [kg/h] [1]<br>Austrag Kautschuk [kg/h] [2] | 0,20 = 1 %<br>0,02 = <1 % | 0,33 = 1 %<br>0,02 = <1 % |
| Entgasungsabschnitte<br>Dampfaustrag [kg/h] [1] | 8,24 = 42 % | 12,2 = 41 % |
| Strangfeuchte [Gew.-%] | 0,2 | 0,2 |

[1]  %-Werte bezogen auf Zeile * = 100
[2]  %-Werte bezogen auf Zeile ** = 100

Die Beispiele zeigen, daß 29 bis 58 Gew.-% des anfänglich im schleuderfeuchten Kautschuk enthaltenen Restwassers bereits im ersten Abquetschabschnitt als flüssiges Wasser entfernt werden. Weitere 1 bis 26 Gew.-% treten im zweiten Abquetschabschnitt flüssig aus. Lediglich 26 bis 47 Gew.-%, also der kleinere Teil des Restwassers, werden in den Entgasungsabschnitten als Dampf ausgetragen.

Der Kautschukaustrag ist mit <1 bis 5 Gew.-% der Menge feuchten Kautschuks im ersten und weniger als 1 Gew.-% im zweiten Abquetschabschnitt gering.

Die Beispiele belegen die Flexibilität des Verfahrens. Die Mengenströme der einzelnen Komponenten können in einem weiten Bereich variiert werden, ohne daß die Extruderkonfiguration (beispielsweise die Geometrie der Schnecke und die Abfolge der Schüsse) oder die Schneckendrehzahl wesentlich geändert werden müssen: In den angegebenen Beispielen wird Komponente A mit 32,0 bis 86,8 kg/h, Komponente B mit 8,8 bis 77,0 kg/h, und Komponente C mit 4,8 bis 44,0 kg/h dem Extruder zugeführt.

Die Komponenten C bzw. D wurden in den Schüssen 0 und 8 bzw. 7 und 8 dem Extruder zugeführt. Der Ort der Zufuhr von C und D kann demnach gleichfalls variiert werden.

16

**Patentansprüche**

1. Verfahren zur Herstellung von schlagzäh modifizierten Thermoplasten durch Vermischen einer wasserfeuchten, bis zu 60 Gew.-% Restwasser enthaltenden Elastomerkomponente A mit einem thermoplastischen Polymeren B sowie weiteren Polymeren C und Zusatzstoffen D in einer Schneckenmaschine unter mechanischer Entwässerung der Elastomerkomponente A, bei dem man die Komponenten A, B, C und D einem Zweischneckenextruder mit gleichsinnig rotierenden Schnecken zuführt, der in Förderrichtung im wesentlichen aus

   - mindestens einem unbeheizten Dosierabschnitt, in den mittels einer Dosiereinrichtung die Elastomerkomponente A dem Extruder zugeführt wird,

   - mindestens einem der Entwässerung der Komponente A dienenden unbeheizten Abquetschabschnitt, der mindestens ein Stauelement, sowie jeweils mindestens eine zugehörige Entwässerungsöffnung, enthält, wobei als Entwässerungsöffnungen keine Seihergehäuse verwendet werden,

   - mindestens einem Abschnitt, in dem das thermoplastische Polymere B als Schmelze in den Extruder eingeführt wird,

   - mindestens einem mit Durchmischungs-, Knet- und/oder anderen Plastifizierungselementen versehenen Abschnitt,

   - mindestens einem mit mindestens einer Entgasungsöffnung versehenen Entgasungsabschnitt, in dem das restliche Wasser als Dampf entfernt wird, und

   - einer Austragszone

   aufgebaut ist, bei dem das aus den Entwässerungsöffnungen austretende Wasser teilweise oder vollständig in flüssiger Phase vorliegt, und bei dem die Komponenten C und/oder D gemeinsam oder getrennt voneinander entweder mit der Komponente A und/oder B zusammen oder getrennt von A und B einem oder mehreren der genannten Extruderabschnitte zugeführt werden.

2. Verfahren nach Anspruch 1, dadurch gekennzeichnet, daß der Zweischneckenextruder vor dem (ersten) Dosierungsabschnitt einen mit einer oder mehreren Entlüftungsöffnungen versehenen Entlüftungsabschnitt aufweist.

3. Verfahren nach Anspruch 1 und 2, dadurch gekennzeichnet, daß die Austragszone durch einen Düsenkopf und eine vor dem Düsenkopf befindliche Vorrichtung zur Schmelzefiltration abgeschlossen ist.

4. Verfahren nach Anspruch 1 bis 3, dadurch gekennzeichnet, daß der Extruder in der Austragszone beheizt wird.

5. Verfahren nach Anspruch 1 bis 4, dadurch gekennzeichnet, daß der Extruder zwischen dem letzten Abquetschabschnitt und dem Abschnitt, in dem die Schmelze des thermoplastischen Polymeren B zugeführt wird, mindestens einem mit Durchmischungs-, Knet- und/oder anderen Plastifizierungselementen versehenen Abschnitt aufweist.

6. Verfahren nach Anspruch 1 bis 5, dadurch gekennzeichnet, daß der Extruder zwischen dem letzten Abquetschabschnitt und dem ersten Entgasungsabschnitt mindestens eine Zufuhröffnung für die Schmelze des thermoplastischen Polymeren B, sowie mindestens einen dieser Zufuhröffnung nachfolgenden und gegebenenfalls mindestens einen dieser Zufuhröffnung vorangehenden Durchmischungsabschnitt, aufweist.

7. Verfahren nach Anspruch 1 bis 6, dadurch gekennzeichnet, daß die Komponenten C und/oder D dem Extruder im Entlüftungsabschnitt zugeführt werden.

8. Verfahren nach Anspruch 1 bis 7, dadurch gekennzeichnet, daß die Komponenten C und/oder D dem Extruder im Dosierabschnitt zugeführt werden.

9. Verfahren nach Anspruch 1 bis 8, dadurch gekennzeichnet, daß die Komponenten C und/oder D dem Extruder in dem Abschnitt, in dem das thermoplastische Polymere B in den Extruder eingeführt wird, zugeführt werden.

10. Verfahren nach Anspruch 1 bis 9, dadurch gekennzeichnet, daß beide Extruderschnecken aus jeweils zwei Abschnitten bestehen, wobei der vordere Abschnitt einen kleineren Durchmesser aufweist und dreigängig ist, und der hintere Abschnitt einen größeren Durchmesser aufweist und zweigängig ist, wobei die Änderung der Schnekkengeometrien zwischen dem Anfang des ersten Plastifizierungsabschnitts, welcher hinter der Zufuhröffnung des thermoplastischen Polymeren B liegt, und dem Anfang des ersten Entgasungsabschnitts, erfolgt.

11. Verfahren nach Anspruch 1 bis 10, dadurch gekennzeichnet, daß als Elastomerkomponente A mindestens ein Pfropfkautschuk mit einem Restwassergehalt von bis zu 60 Gew.-% eingesetzt wird.

12. Verfahren nach Anspruch 1 bis 11, dadurch gekennzeichnet, daß als Elastomerkomponente A ein zwei- oder mehrstufig aufgebauter Pfropfkautschuk, enthaltend eine Grundstufe aus einem oder mehreren der Monomeren Butadien, Styrol, Alkylstyrol, Alkylacrylat, Alkylmethacrylat und geringen Mengen anderer, auch vernetzender Monomerer und eine Pfropfstufe aus Styrol, Alkylstyrol, Acrylnitril, Methylmethacrylat oder Mischungen dieser Monomeren, verwendet wird, und als thermoplastisches Polymeres B ein Styrol-Acrylnitril-Copolymeres, Polystyrol, Polymethylmethacrylat, Polyvinylchlorid oder Mischungen dieser Polymeren, eingesetzt wird.

13. Verfahren nach Anspruch 1 bis 12, dadurch gekennzeichnet, daß als Elastomerkomponente A ein Pfropfkautschuk auf Basis von Polybutadien und/oder Polyalkylacrylat als Grundstufe und einem Copolymeren aus Styrol und Acrylnitril als Pfropfstufe, und als thermoplastisches Polymeres B ein Styrol-Acrylnitril-Copolymeres, eingesetzt wird.

14. Verfahren nach Anspruch 1 bis 13, dadurch gekennzeichnet, daß als Elastomerkomponente A ein zwei- oder mehrstufig aufgebauter Pfropfkautschuk eingesetzt wird, der im wesentlichen aus Polyalkylacrylat und einem Copolymeren aus Styrol und Acrylnitril besteht, und als thermoplastisches Polymeres B ein Styrol-Acrylnitril-Copolymeres, eingesetzt wird.

15. Verfahren nach Anspruch 1 bis 14, dadurch gekennzeichnet, daß die Komponente C

- ein thermoplastisches Polymeres auf Basis der zur Herstellung des thermoplastischen Polymeren B verwendeten Monomeren mit gleicher summarischer Zusammensetzung, jedoch mit anderer mittlerer Molmasse $\overline{M}_w$, oder mit anderen Mengenanteilen der Monomeren, oder

- ein Polymeres, erhalten durch Copolymerisation von $C_2$ bis $C_8$-Alkenen mit Vinylaromaten, mit polaren Comonomeren, mit Kohlenstoffmonoxid, mit nichtaromatischen Vinylverbindungen, und/oder mit basischen Monomeren, oder

- ein Polymeres auf Basis von $\alpha$-Methylstyrol/Acrylnitril, oder Methylmethacrylat/Alkylacrylat, oder

- ein Polymeres auf Basis von Butadienkautschuk, oder

- ein durch anionische Polymerisation hergestelltes Polymeres aus Butadien und Styrol, ist.

16. Verfahren nach Anspruch 1 bis 15, dadurch gekennzeichnet, daß der Pfropfkautschuk einen Durchmesser von 0,05 bis 20 μm hat.

## Claims

1. A process for the preparation of toughened thermoplastics by mixing a water-moist elastomer component A containing up to 60 % by weight of residual water with a thermoplastic polymer B and further polymers C and additives D in an extruder with mechanical dewatering of the elastomer component A, wherein the components A, B, C and D are fed to a twin-screw extruder which has corotating screws and essentially comprises, in the transport direction,

- at least one unheated metering section in which elastomer component A is fed to the extruder by a metering means,

- at least one unheated squeeze section which serves for dewatering the component A and contains at least one retarding element and in each case at least one associated dewatering orifice, no Seiher barrels being used as dewatering orifices,

- at least one section in which the thermoplastic polymer B is introduced as a melt into the extruder,

- at least one section provided with mixing, kneading and/or other plasticating elements,

- at least one devolatilization section which is provided with at least one devolatilization orifice and in which the residual water is removed as steam, and

- a discharge zone,

the water emerging from the devolatilization orifices being present partially or completely in the liquid phase, and the components C and/or D, together or separately from one another, being fed to one or more of the stated extruder sections, either together with the components A and/or B or separately from A and B.

2. A process as claimed in claim 1, wherein the twin-screw extruder has a deaeration section, provided with one or more deaeration orifices, before the (first) metering section.

3. A process as claimed in claims 1 and 2, wherein the discharge zone is terminated by a die head and a melt filtration apparatus located upstream of the die head.

4. A process as claimed in any of claims 1 to 3, wherein the extruder is heated in the discharge zone.

5. A process as claimed in any of claims 1 to 4, wherein the extruder has at least one section provided with mixing elements, kneading elements and/or other plasticating elements between the final squeeze section and the section in which the melt of the thermoplastic polymer B is fed in.

6. A process as claimed in any of claims 1 to 5, wherein, between the final squeeze section and the first devolatilization section, the extruder has at least one feed orifice for the melt of the thermoplastic polymer B and at least one mixing section following this feed orifice and, if required, at least one mixing section preceding this feed orifice.

7. A process as claimed in any of claims 1 to 6, wherein the component C and/or D is fed to the extruder in the deaeration section.

8. A process as claimed in any of claims 1 to 7, wherein the component C and/or D is fed to the extruder in the metering section.

9. A process as claimed in any of claims 1 to 8, wherein the component C and/or D is fed to the extruder in the section in which the thermoplastic polymer B is introduced into the extruder.

10. A process as claimed in any of claims 1 to 9, wherein the two extruder screws each consist of two sections, the front section having a smaller diameter and comprising three flights and the rear section having a larger diameter and comprising two flights, and the screw geometries changing between the beginning of the first plasticating section, which is located behind the feed orifice of the thermoplastic polymer B, and the beginning of the first devolatilization section.

11. A process as claimed in any of claims 1 to 10, wherein at least one graft rubber having a residual water content of up to 60 % by weight is used as elastomer component A.

12. A process as claimed in any of claims 1 to 11, wherein a graft rubber composed of two or more stages and containing a base comprising one or more of the monomers butadiene, styrene, alkylstyrene, alkyl acrylate, alkyl methacrylate and small amounts of other monomers, including crosslinking monomers, and a graft stage comprising styrene, alkylstyrene, acrylonitrile, methyl methacrylate or mixtures of these monomers is used as elastomer component A, and a styrene-acrylonitrile copolymer, polystyrene, polymethyl methacrylate, polyvinyl chloride or a mixture of these polymers is used as thermoplastic polymer B.

13. A process as claimed in any of claims 1 to 12, wherein a graft rubber based on polybutadiene and/or polyalkyl acrylate as the base and a copolymer of styrene and acrylonitrile as the graft stage is used as elastomer component A, and a styrene-acrylonitrile copolymer as thermoplastic polymer B.

14. A process as claimed in any of claims 1 to 13, wherein a graft rubber composed of two or more stages and essentially consisting of polyalkyl acrylate and a copolymer of styrene and acrylonitrile is used as elastomer component A, and a styrene-acrylonitrile copolymer as thermoplastic polymer B.

15. A process as claimed in any of claims 1 to 14, wherein component C is

- a thermoplastic polymer based on the monomers used for the preparation of the thermoplastic polymer B, having the same empirical composition but a different average molecular weight $\overline{M}_w$, or containing different amounts of monomers, or

- a polymer obtained by copolymerization of $C_2$-$C_8$-alkenes with vinyl aromatics, with polar comonomers, with carbon monoxide, with nonaromatic vinyl compounds and/or with basic monomers, or

- a polymer based on $\alpha$-methylstyrene/acrylonitrile or methyl methacrylate/alkyl acrylate, or

- a polymer based on butadiene rubber, or

- a polymer comprising butadiene and styrene and prepared by anionic polymerization.

16. A process as claimed in any of claims 1 to 15, wherein the graft rubber has a diameter of from 0.05 to 20 $\mu$m.

**Revendications**

1. Procédé pour la fabrication de thermoplastiques modifiés à haute résistance aux chocs, par mélange, dans une extrudeuse à vis, d'un composant élastomérique A humidifié à l'eau, contenant jusqu'à 60% en poids d'eau résiduelle, avec un polymère thermoplastique B ainsi qu'avec un autre polymère C et des additifs D avec essorage mécanique du composant élastomérique A, dans lequel procédé on amène les composants A, B, C et D dans une extrudeuse à double vis dont les vis tournent dans le même sens et qui, dans la direction du transport, est essentiellement constituée de:

   - au moins une partie de dosage, non chauffée, par laquelle le composant élastomérique A est amené à l'extrudeuse au moyen d'un dispositif de dosage,
   - au moins une partie d'écrasement, non chauffée, qui sert à l'évacuation de l'eau du composant A et qui contient au moins un élément d'accumulation ainsi que, associée à chacune de ces parties, au moins une ouverture d'évacuation d'eau, et comme ouvertures d'évacuation d'eau, on n'utilise pas de boîtiers filtrants,
   - au moins une partie par laquelle le polymère thermoplastique B est introduit dans l'extrudeuse à l'état fondu,
   - au moins une partie dotée d'éléments de mélange, de pétrissage et/ou d'autres éléments de plastification,
   - au moins une partie de dégazage dotée d'au moins une ouverture de dégazage, et par laquelle l'eau résiduelle est évacuée sous forme de vapeur, et - une zone d'extraction,

   dans lequel l'eau quittant les ouvertures d'évacuation d'eau se présente en partie ou en totalité en phase liquide, et dans lequel les composants C et/ou D sont amenés à une ou plusieurs desdites parties d'extrudeuse soit ensemble ou séparés l'un de l'autre, soit en même temps que les composants A et/ou B ou séparément par rapport à A et à B.

2. Procédé selon la revendication 1, caractérisé en ce que l'extrudeuse à double vis présente, en avant de la (première) partie de dosage, une partie d'évacuation d'air dotée d'une ou plusieurs ouvertures d'évacuation d'air.

3. Procédé selon les revendications 1 et 2, caractérisé en ce que la zone d'extraction est refermée par une tête de tuyère et par un dispositif de filtration du bain de fusion disposé en avant de la tête de tuyère.

4. Procédé selon les revendications 1 à 3, caractérisé en ce que l'extrudeuse est chauffée dans la zone d'extraction.

5. Procédé selon les revendications 1 à 4, caractérisé en ce que, entre la dernière partie d'écrasement et la partie dans laquelle le polymère thermoplastique B est apporté à l'état fondu, l'extrudeuse présente au moins un élément de mélange, de pétrissage et/ou d'autres éléments de plastification.

6. Procédé selon les revendications 1 à 5, caractérisé en ce que, entre la dernière partie d'écrasement et la première partie de dégazage, l'extrudeuse présente au moins une ouverture d'amenée du polymère thermoplastique B à l'état fondu, ainsi qu'au moins une partie de mélange qui suit cette ouverture d'amenée et qui précède éventuellement au moins une de ces ouvertures d'amenée.

7. Procédé selon les revendications 1 à 6, caractérisé en ce que les composants C et/ou D sont amenés dans l'extrudeuse par la partie d'évacuation d'air.

8. Procédé selon les revendications 1 à 7, caractérisé en ce que les composants C et/ou D sont amenés à l'extrudeuse par la partie de dosage.

9. Procédé selon les revendications 1 à 8, caractérisé en ce que les composants C et/ou D sont amenés à l'extrudeuse par la partie dans laquelle le polymère thermoplastique B est amené dans l'extrudeuse.

10. Procédé selon les revendications 1 à 9, caractérisé en ce que les deux vis de l'extrudeuse sont chacune constituées de deux tronçons, le tronçon avant présentant un diamètre plus petit et étant à triple pas, le tronçon arrière présentant un diamètre plus grand et étant à double pas, la modification de la géométrie des vis ayant lieu entre le début de la première partie de plastification située en arrière de l'ouverture d'amenée du polymère thermoplastique B et le début de la première partie de dégazage.

11. Procédé selon les revendications 1 à 10, caractérisé en ce que l'on utilise comme composant élastomérique A au moins un caoutchouc polymérique greffé contenant une teneur résiduelle en eau pouvant atteindre 60% en poids.

12. Procédé selon les revendications 1 à 11, caractérisé en ce que l'on utilise comme composant élastomérique A un caoutchouc en polymérique greffé constitué en deux ou plusieurs étapes qui comportent une étape de base en un ou plusieurs des monomères butadiène, styrène, alkylstyrène, acrylate d'alkyle, méthacrylate d'alkyle et de faibles quantités d'autres monomères également aptes à réticuler, et une étape de greffage de styrène, alkylstyrène, acrylonitrile, méthacrylate de méthyle ou mélanges de ces monomères, et en ce que l'on utilise comme polymère thermoplastique B un copolymère de styrène et d'acrylonitrile, un polystyrène, un poly(méthacrylate de méthyle), un poly(chlorure de vinyle) ou des mélanges de ces polymères.

13. Procédé selon les revendications 1 à 12, caractérisé en ce que, lors de l'étape de base, l'on utilise comme composant élastomérique A un caoutchouc polymérique greffé à base de polybutadiène et/ou de poly(acrylate d'alkyle), et lors de l'étape de greffage, un copolymère de styrène et d'acrylonitrile, et en ce que l'on utilise comme polymère thermoplastique B un copolymère de styrène et d'acrylonitrile.

14. Procédé selon les revendications 1 à 13, caractérisé en ce que l'on utilise comme composant élastomérique A un caoutchouc polymérique greffé constitué en deux ou plusieurs étapes, qui est essentiellement constitué de poly(acrylate d'alkyle) et d'un copolymère de styrène et d'acrylonitrile, et en ce que l'on utilise comme polymère thermoplastique B un copolymère de styrène et d'acrylonitrile.

15. Procédé selon les revendications 1 à 14, caractérisé en ce que le composant C est:

   - un polymère thermoplastique à base des monomères utilisés pour la préparation du polymère thermoplastique B, qui présente la même composition additive mais une autre masse molaire moyenne $\overline{M}_w$ ou qui présente d'autres proportions des monomères, ou
   - un polymère obtenu par copolymérisation d'alcènes en $C_2$ à $C_8$ avec des composés aromatiques de vinyle, des comonomères polaires, du monoxyde de carbone, des composés non aromatiques de vinyle et/ou des monomères basiques, ou
   - un polymère à base d'$\alpha$-méthylstyrène/acrylonitrile ou de méthacrylate de méthyle/acrylate d'alkyle, ou
   - un polymère à base de caoutchouc butadiène, ou
   - un polymère de butadiène et de styrène préparé par polymérisation anionique.

16. Procédé selon les revendications 1 à 15, caractérisé en ce que le caoutchouc polymérique greffé présente un diamètre de 0,05 à 20 $\mu$m.

FIG. 1

Luft   A                B       Wasser-  Wasser-
                                          dampf     dampf

| 1 | 2 | 3 | 3' | 5" | 4 | 5 | 5' | 6 | 6' | 7 | → Produkt |

Wasser    Wasser
flüssig    flüssig